Europäisches Patentamt

European Patent Office

Office européen des brevets

(19)

(11) **EP 1 279 902 A2**

(12) **EUROPEAN PATENT APPLICATION**

(43) Date of publication:
**29.01.2003 Bulletin 2003/05**

(51) Int Cl.[7]: **F24F 11/00**

(21) Application number: **02291099.6**

(22) Date of filing: **02.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.07.2001 KR 2001044909**
**25.07.2001 KR 2001044910**

(71) Applicant: **LG ELECTRONICS INC.**
**Seoul (KR)**

(72) Inventors:
• **Choi, Ho-Seon**
  **Seoul (KR)**
• **Lee, Ju-Youn**
  **Kyunggi-Do (KR)**

(74) Representative: **Loisel, Bertrand**
  **Cabinet Plasseraud,**
  **84, rue d'Amsterdam**
  **75440 Paris Cédex 09 (FR)**

(54) **Apparatus and method for controlling operation of air conditioner**

(57) An apparatus and method for controlling operation of an air conditioner, comprising a display unit for displaying various question data connected with a personal air conditioning information, an input unit for inputting a personal air conditioning information corresponding to question data displayed on the display unit and a microcomputer for calculating a personal characteristic value by personal air conditioning information inputted from the input unit, and controlling an air conditioner by calculating indoor temperature/air current/humidity according to the calculated characteristic value in case of air cooling or heating, can maximize pleasantness and satisfaction of the user by calculating the personal characteristic value to set indoor temperature, air current and humidity.

FIG. 1

EP 1 279 902 A2

**Description**

BACKGROUND OF THE INVENTION

1. Field of the Invention

The present invention relates to an apparatus and method for controlling operation of an air conditioner, and more particularly, to an apparatus and method for controlling operation of an air conditioner which is capable of performing cooling and heating operation of an air conditioner according to characteristics of respective users.

2. Description of the Background Art

Generally, an air conditioner is an apparatus for making indoor air pleasant with cold or hot air generated from the indoor and outdoor heat exchanger which carries out reversibly compression, condensation, expansion and evaporation for cooling or heating.

However, recently, the air conditioner has dehumidification function for improving pleasantness of a user by adjusting indoor temperature as well as the cooling and heating functions.

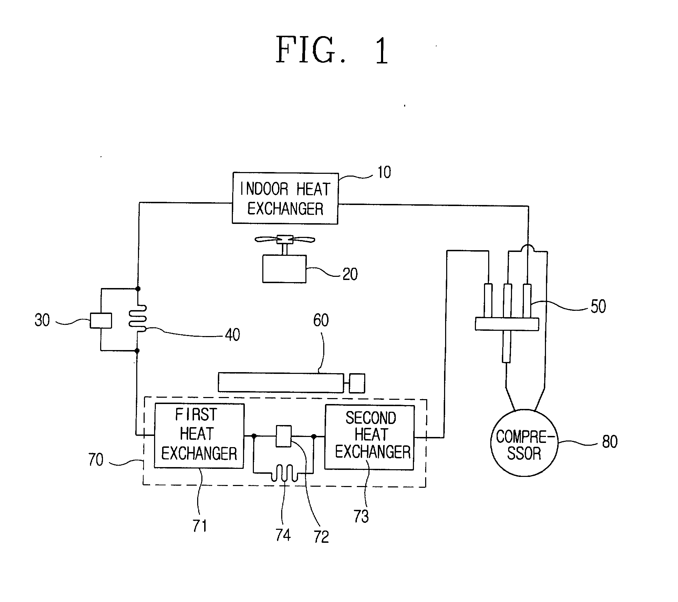

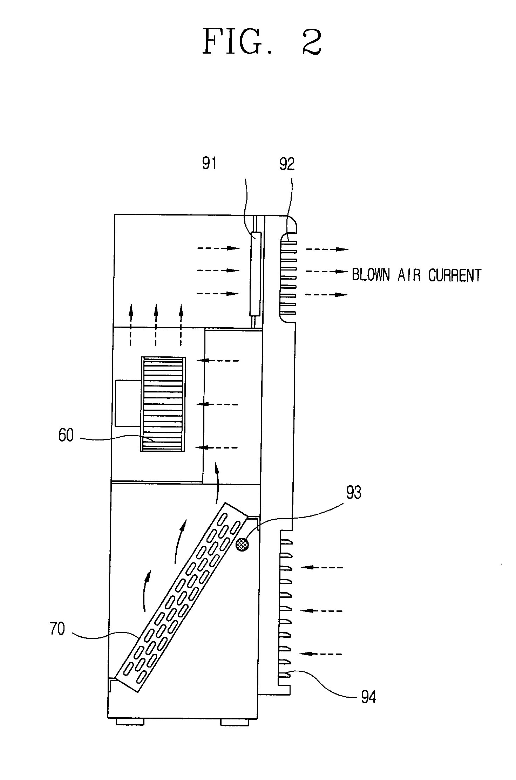

The above air conditioner will be described with reference to the Figure 1 and Figure 2 as follows.

Figure 1 illustrates a block diagram showing the composition of the cooling cycle of a general air conditioner.

Referring to Figure 1, the general air conditioner comprises: a compressor 80 for making steam of high temperature and high pressure by sucking and compressing refrigerant steam of low temperature and low pressure discharged from an indoor heat exchanger 70, an outdoor heat exchanger 10 for changing the refrigerant gas discharged from the compressor 80 into saturated liquid of high pressure, an indoor heat exchanger 70 for sucking the saturated liquid of high pressure discharged from the above outdoor heat exchanger 10 into refrigerant of low temperature and low pressure through an expansion device 40 and after that, and changes a saturated steam having no moisture by evaporating the refrigerant of low temperature and low pressure, a four-way valve 50 for controlling flow of the refrigerant according to the heating or cooling mode, a two-way valve 30 for discharging refrigerant of high pressure into the indoor heat exchanger 70 during dehumidifying process, an indoor fan 60 for discharging heat-exchanged air by passing the indoor air through the surface of the indoor heat exchanger 70 after sucking the indoor air, an expansion device 40 for changing the liquid condensed in the indoor heat exchanger 70 into refrigerant of low temperature low and pressure and an outdoor fan 20 for cooling the refrigerant flowed in the outdoor heat exchanger 10.

The indoor heat exchanger 70 comprises: a first heat exchanger 71 for sucking refrigerant in which liquid of high pressure and gas are mixed and discharging liquid of high pressure by discharging the heat during dehumidifying process, a second expansion device 74 for dropping the pressure of the liquid discharged from the first heat exchanger 71, a second heat exchanger 73 for sucking the refrigerant which is mixed the liquid and the gas of low pressure, through the second expansion device 74 and evaporating the above refrigerant to discharge refrigerant of low pressure and low temperature having no moisture and a two-way valve 74 for blocking direct discharge of the liquid of high pressure, which is discharged from the first heat exchanger 71 during dehumidifying process.

An operation of the general air conditional composed as above will be described as follows.

First, in case of heating mode, the refrigerant of high temperature and high pressure compressed in the compressor 80 is flowed into the indoor heat exchanger 70 through the four-way valve 50. Then, the indoor heat exchanger 70 opens the two-way valve 72 between the first heat exchanger 71 and the second heat exchanger 73 and discharges the flowed refrigerant of high temperature and high pressure to the expansion device 40 by condensing the refrigerant.

The refrigerant is expanded to be refrigerant of low temperature and pressure passing through the expansion device 40.

At that time, indoor air sucked through an indoor fan 60 is passed through a surface of the indoor heat exchanger 70, and then, the heat is exchanged to blow out hot air. Thereby the indoor temperature is increased.

After that, the outdoor heat exchanger 10 sucks the refrigerant of low temperature and pressure and evaporates to discharge the refrigerant of gas state.

The compressor 80 sucks the refrigerant of gas state discharged from the outdoor heat exchanger 10 and compresses the refrigerant to be the refrigerant of high temperature and high pressure. The above operations are repeated to perform the heating operation.

On the other hand, in case of cooling mode, the refrigerant of high temperature and high pressure compressed in the compressor 80 is passed through the four-way valve 50 and flowed into the outdoor heat exchanger 10.

The outdoor heat exchanger 10 condenses the flowed refrigerant and discharges the condensed refrigerant into the expansion device 40.

After that, the condensed refrigerant is expanded into the refrigerant of low temperature and low pressure through the expansion device 40 and discharged to the indoor heat exchanger 70.

The indoor heat exchanger 70 sucks the refrigerant of low temperature and low pressure and evaporates the refrigerant to discharge the refrigerant of gas state, and the compressor 80 sucks the gas refrigerant discharged from the indoor heat exchanger 70.

The indoor heat exchanger 70 turns off the two-way valve 72 between the first heat exchanger 71 and the second heat exchanger 73 to be operated as an evaporator to evaporate the flowed refrigerant of low temperature and low pressure.

At this time, the indoor air sucked by the indoor fan 60 passes through a cold surface of the indoor heat exchanger 70, and then, the heat is exchanged and the cold air is blown into the room, and therefore, the indoor temperature is lowered.

The compressor 80 sucks the refrigerant of gas state discharged from the indoor heat exchanger 70 and discharges the refrigerant into the outdoor heat exchanger 10 by compressing the refrigerant to be the refrigerant of high temperature and high pressure. The above operations are repeated to perform the cooling operation.

On the other hand, in case of dehumidifying mode, the refrigerant of high temperature and pressure compressed by the compressor 80 is flowed into the outdoor heat exchanger 10 passing through the four-way valve 50. At that time, an outdoor fan 20 rotates at lower speed, and therefore, the refrigerant of high temperature and high pressure flowed to the outdoor heat exchanger 10 passes through the two-way valve 30 in the state that the refrigerant is rarely cooled down and flowed into the indoor heat exchanger 70 .

The indoor heat exchanger 70 blocks the inner two-way valve 72 to separate the first heat exchanger 71 and the second heat exchanger 73. That is, the first heat exchanger 71 sucks the refrigerant of high pressure in which the liquid and the gas are mixed and discharges the heat to exhaust the liquid of high pressure, and the second heat exchanger 73 sucks the liquid of high pressure exhausted from the first heat exchanger 71 as the liquid of low pressure through the second expansion device 74. In addition, the second heat exchanger 73 evaporates the above liquid to discharge the refrigerant of low temperature and low pressure having no moisture .

At that time, the indoor air sucked by the indoor fan 60 passes through the cold surface of the second heat exchanger 73, and thereby the heat is exchanged and the humidity is removed. And then, the dried air passes through the hot surface of the first heat exchanger 71, and discharged into the room as being heated.

As described above, by the dehumidifying operation of the air conditioner, dried air is exhausted thus to enhance pleasantness of the user.

Operation of an air conditioner equipped with the cooling cycle is explained in detail by referring to Figure 2 as follows.

Figure 2 illustrates an interior portion of a general air conditioner schematically.

Generally, an air conditioner comprises a suction unit 94, an evaporator 70 for evaporating liquid into gas, an indoor suction temperature sensor 93 for sensing indoor temperature, an indoor fan 60, up-and down vane 92 for adjusting the air current blown out from the cooling/heating cycle of the air conditioner to the upper and lower directions and a left-and-right direction vane 91 for adjusting the air current blown out from the cooling/heating cycle of the air conditioner to the left and right directions.

Herein, the operation controlling method with the above composition will be described as follows.

First, when a user sets the cooling mode, the indoor suction temperature sensor 93 installed in the suction unit 94 of the air conditioner measures the indoor temperature and turns off the operation of the compressor 80 in case the measured temperature is lower than the minimum value of the setting temperature, or turns on the operation of the compressor 80 in case the measured temperature is higher than the maximum value of the setting temperature. The above operations is repeated to perform cooling operation.

On the other hand, when a user sets the heating mode, the indoor suction temperature sensor 93 installed in the suction unit 94 of the air conditioner measures the indoor temperature and turns off the operation of the compressor 80 in case the measured temperature is higher than the minimum value of the setting temperature, or turns on the operation of the compressor 80 in case the measured temperature is lower than the maximum value of the setting temperature. The above operations are repeated to perform heating operation.

By the operation of the compressor 80, when the cooling or heating air is blown out, the up-and-down direction vane 92 and left-and-right direction vane 91 rotates to adjust a direction of the blown out cooling heating air current and the indoor temperature repeatedly rise and fall between the maximum and minimum values of the setting temperature.

The conventional air conditioner collectively controls the temperature, humidity and air current, according to the temperature set by the user.

However, the temperature, humidity, air current that the user feels pleasantness are different, and accordingly, when the temperature, humidity, air current of the air conditioner is controlled by the user's setting temperature as conventionally, there can occur a case that the user does not feel pleasantness.

SUMMARY OF THE INVENTION

Accordingly, the present invention provides an apparatus and method for controlling operation of an air conditioner, capable of improving pleasantness of users by performing cooling or heating air conditioning control, by calculating cooling or heating indoor temperature, air current and humidity, according to the respective characteristic of the user in case of cooling or heating air conditioning of the air conditioner.

Another object of the present invention is to provide an apparatus and method for controlling operation of an air conditioner, capable of conveniently inputting or correcting the personal condition information, according to the characteristics of the respective users by storing various personal conditioning information and data in the air conditioner using a remote controller, PC and the mobile communication terminal.

To achieve these and other advantages and in accordance with the purpose of the present invention, as embodied and broadly described herein, there is provided an apparatus for controlling operation of an air conditioner, comprising a display unit for displaying various question data in order to obtain a personal air conditioning information, an input unit for inputting personal air conditioning information corresponding to the question data displayed on the display unit and a microcomputer for calculating a personal characteristic value from the personal air conditioning information inputted from the input unit, and controlling an air conditioner by calculating indoor temperature/air current/ humidity according to the calculated characteristic value in air cooling or heating..

To achieve these and other advantages and in accordance with the purpose of the present invention, as embodied and broadly described herein, there is provided a method for controlling operation of an air conditioner, comprising the steps of displaying various question data for detecting personal air conditioning information when a personal characteristic initializing mode is inputted, inputting personal air conditioning information corresponding to the various question data, storing the inputted personal air conditioning information, calculating personal characteristic value by the response data corresponding to the inputted personal air conditioning information, calculating indoor temperature/air current/humidity according to air cooling or heating by the calculated personal characteristic value and controlling the air conditioner by the calculated indoor temperature, air current and humidity according to air cooling or heating.

The foregoing and other, features, aspects and advantages of the present invention will become more apparent from the following detailed description when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 illustrates a block diagram showing the composition of the cooling cycle of a general air conditioner;
Figure 2 illustrates an interior portion of a general air conditioner schematically;
Figure 3 illustrates a block diagram showing the composition of an air conditioner in accordance with the present invention;
Figure 4 illustrates a block diagram showing the composition of the microcomputer of Figure 3;
Figure 5 illustrates a flowcharts the operating of the air conditioner in accordance with the present invention;
Figure 6 illustrates schematically a remote controller in accordance with a first embodiment of an input unit of Figure 3;
Figure 7 illustrates schematically the connection between the air conditioner and the internet;
Figure 8 illustrates schematically the connection between the air conditioner and a computer in accordance with a second embodiment of the input unit of Figure 3; and
Figure 9 illustrates schematically the connection between the air conditioner and a mobile communication terminal in accordance with a third embodiment of the input unit of Figure 3.

DETAILED DESCRIPTION OF THE PREFERRED EMBODIMENTS

Reference will now be made in detail to the preferred embodiments of the present invention, examples of which are illustrated in the accompanying drawings.

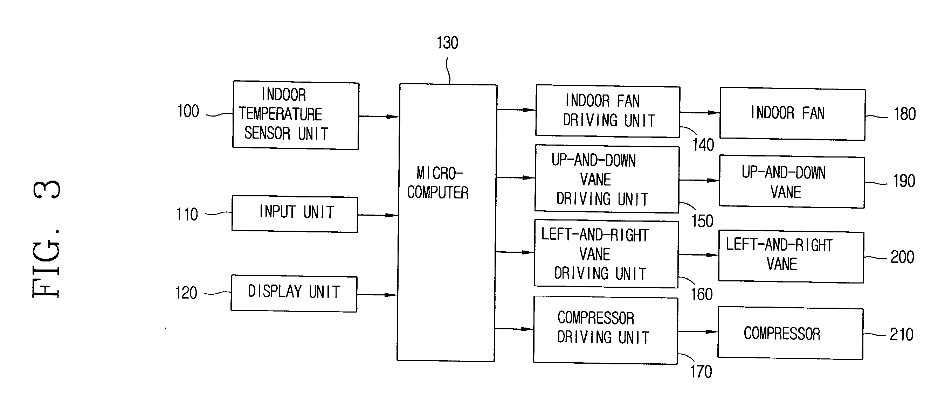

Figure 3 illustrates a block diagram showing the composition of an air conditioner in accordance with the present invention.

Referring to Figure 3, the air conditioner according to the present invention comprises: an indoor temperature sensor unit 100 for sensing indoor temperature, a display unit 120 for displaying question data, an input unit 110 for inputting air conditioning information of a user, a microcomputer 130 for calculating personal characteristic value using the air conditioning information inputted from the input unit 110, calculating cooling or heating indoor temperature, air current and humidity by the calculated personal characteristic value and controlling cooling and heating air conditioning according to the calculated value, an indoor fan driving unit 140 for outputting an indoor fan 180 driving signal by the control signal of the microcomputer 130, an indoor fan 180 for driven by the driving signal outputted from the indoor fan driving unit 140, an up-and-down vane driving unit 150 for outputting an up-and-down direction driving signal by the control signal of the microcomputer 130, an up-and-down vane 190 for adjusting the cooling or heating air current to the upper and lower direction by the control signal outputted from the up-and-down vane driving unit 150, a left-and-right vane driving unit 160 for outputting a left-and-right direction driving signal by the control signal of the microcomputer 130, a left-and-right vane 200 for adjusting the direction of the cooling or heating air current to the left or right direction, according to the control signal outputted from the left-and-right vane driving unit 160, a compressor driving unit 170 for driving a compressor 210 according to the control signal of the microcomputer 130 and the compressor 210 for sucking and compressing the refrigerant steam of low temperature and pressure by the driving signal outputted from the compressor driving unit 170, to be steam of high temperature and pressure.

The input unit 110 can use a remote controller, computer and a mobile communication terminal so that the user can input one's own air conditioning information according to questions for the personal characteristics.

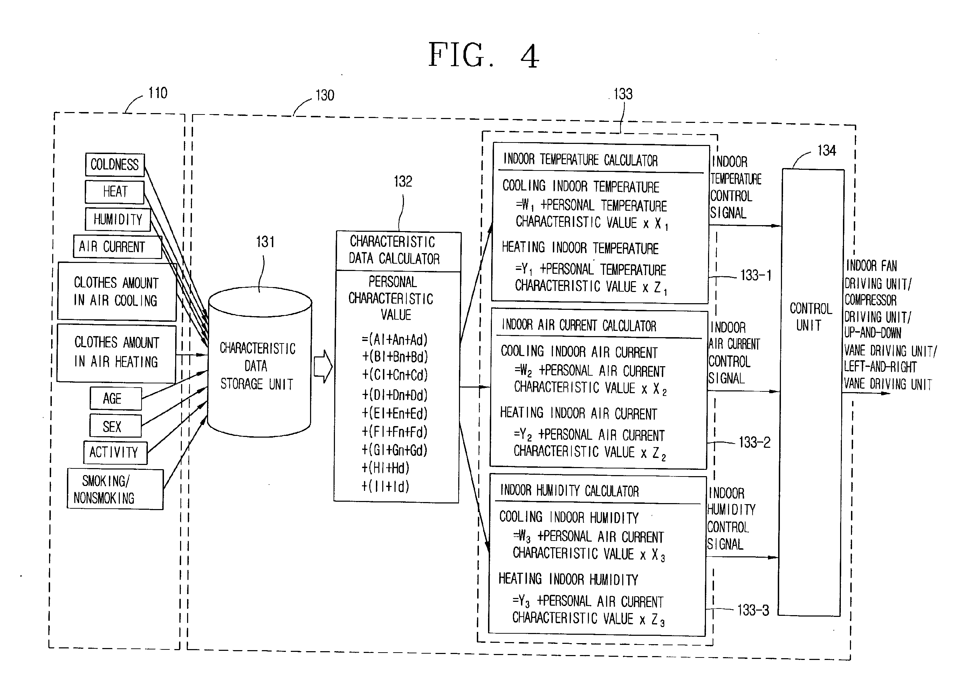

Figure 4 illustrates a block diagram showing the composition of the microcomputer of Figure 3.

The microcomputer 130 comprises a characteristic data storage unit 131 for storing the question data and response data corresponding to the respective question data in advance, storing the response data values corresponding to the air conditioning information data inputted by the user and outputting the stored response data values, a characteristic data calculator 132 for calculating the personal characteristic value by the response data value outputted from the characteristic data storage unit 131, a control calculation unit 133 for calculating indoor temperature, air current and humidity by the personal characteristic value calculated from the characteristic data calculator 132 and a control unit 134 for outputting the control signal for driving the compressor driving unit 170, indoor fan driving unit 140, up-and-down vane driving unit 150 and left-and-right vane direction unit 160, by indoor temperature, air current and humidity calculated from the control calculation unit 133.

The control calculation unit 133 comprises an indoor temperature calculator 133-1 for calculating indoor temperature by the personal characteristic value calculated by the characteristic value calculator 132 and outputting the indoor temperature control signal according to the calculated indoor temperature, an indoor air current calculator 133-2 for calculating the indoor air current by the personal characteristic value and outputting the indoor air current control signal according to the calculated indoor air current value and an indoor humidity calculator 133-3 for calculating the indoor humidity by the personal characteristic value and outputting the indoor humidity control signal according to the calculated indoor humidity value.

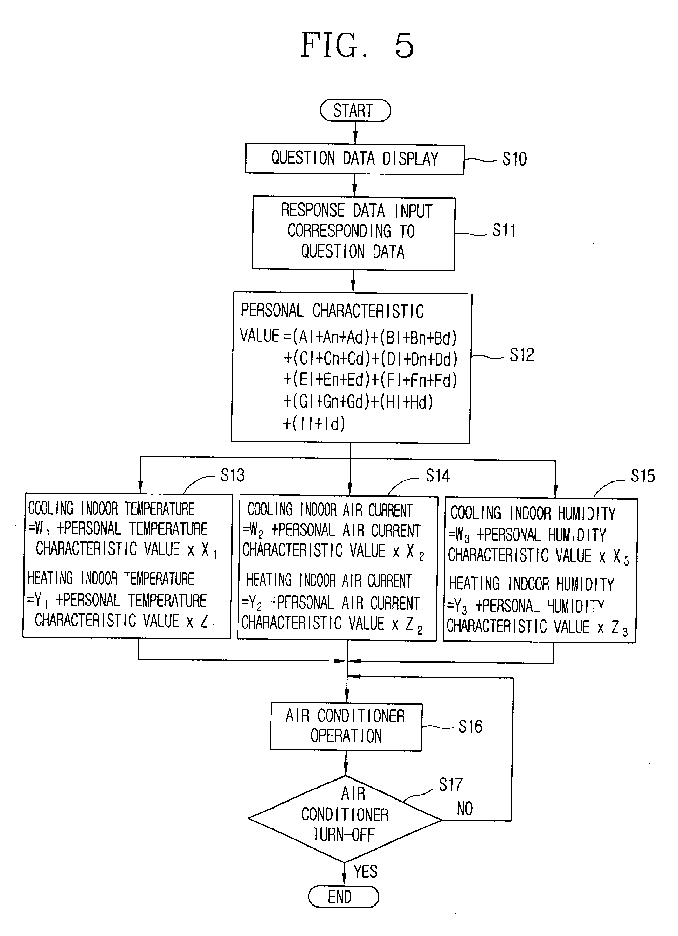

The operation of above composed of an air conditioner will be described in detail with reference to Figures 5, 6, 7, 8 and 9 as follows.

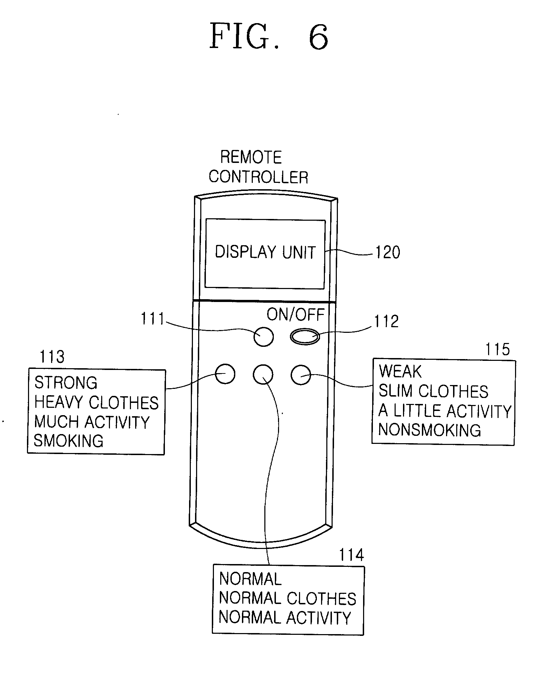

Figure 5 illustrates a flowcharts the operating of the air conditioner in accordance with the present invention, and Figure 6 illustrates schematically a remote controller in accordance with a first embodiment of an input unit of Figure 3.

Firstly, when the user selects the personal characteristic initializing mode using the input unit 110, the microcomputer 130 displays question data on the display unit 120 to detect personal characteristics. (S10)

The question data include coldness, heat, humidity, air current, clothes amount in case of air cooling, clothes amount in case of air heating, age, sex, activity, smoking/nonsmoking and the like.

In addition to the above question data, the question data can be varied more such as copy efficiency, cleanness and the like.

The input unit 110 is composed of a remote controller for inputting data using buttons from the remote distance and comprises a display unit 120 for displaying question data, a mode selection key 111 for operating a personal characteristic initializing mode for inputting personal air conditioning information to the air conditioner, or a personal characteristic mode for selecting among the stored data, and selection keys 113, 114 and 115 for inputting air conditioning information of the user according to the respective questions displayed on the display unit 120.

The selection keys 113, 114 and 115 were illustrated with just 3 keys of large, medium and small in accordance with the embodiment of the present invention, but the keys can be composed of 3 or more keys.

First, the microcomputer 130 displays a question, that ' strong for cold?' on the display unit 120 of the remote controller, then the user determines whether he or she is strong for cold and selects one of the selection keys 113,114 and 115. (S11)

The selected data is inputted in the characteristic data storage unit 131 of the microcomputer 130 and the characteristic storage unit 131 stores the response data value corresponding to the inputted data among the stored response data value.

After that, when the microcomputer 130 displays questions such as 'strong for heat?', 'strong for humidity?',

'clothes amount in case of air cooling?', 'clothes amount in case of air heating?', 'age of the user?', 'sex of the user?', 'current activity amount?' and 'smoking or nonsmoking?' on the display unit 120, the user selects a preferred key among large/medium/small selection keys 113, 114 and 115 to all questions but the questions on sex and smoking. (S11)

Also, in case the user is male and a smoker, the large key 113 is selected, and in case the user is female and a nonsmoker, the small key 115 is selected. (S11)

When the personal air conditioning information data are inputted, the microcomputer 130 stores the response data value corresponding to the personal air conditioning information data inputted by the user among the response data values stored in the characteristic data storage unit 131 in advance.

The characteristic data calculator 132 in the microprocessor 130 reads the value stored in the characteristic data storage unit 131 and calculates the personal characteristic value. (S12)

The formula for calculating the above personal characteristic value is as follows.

$$\text{Personal characteristic value =}$$

$$(Al+An+Ad)+(Bl+Bn+Bd)+(Cl+Cn+Cd)+(Dl+Dn+Dd)+$$

$$(El+En+Ed)+(Fl+Fn+Fd)+(Gl+Gn+Gd)+(Hl+Hd)+(Il+Id) \tag{1}$$

Al is a response data value for the key selected when the user feels a cold.

An is a response data value for the key selected when the user feels a normal for cold.

Ad is a response data value for the key selected when the user is not feels the cold.

Bl is a response data value for the key selected when the user feels a heat.

Bn is a response data valuefor the key selected when the user feels a normal for heat.

Bd is a response data value for the key selected when the user is not feels the heat.

Cl is a response data value for the key selected when the user feels a strong for humidity.

Cn is a response data value for the key selected when the user feels a normal for humidity

Cd is a response data value for the key selected when the user feels a weak for humidity.

Dl is a response data value for the key selected when the user feels a strong for air current.

Dn is a response data value for the key selected when the user feels a normal for air current.

Dd is a response data value for the key selected when the user feels a weak for air current.

El is a response data value according to a case that the clothes of the user is thick in air cooling

En is a response data value according to the case that the clothes of the user is normal in air cooling.

Ed is a response data value according to the case that the clothes of the user is slim in air cooling.

Fl is a response data value according to the case that the clothes of the user is thick in air heating.

Fn is a response data value according to the case that the clothes of the user is normal in air heating.

Fd is a response data value according to the case that the clothes of the user is slim in air heating.

Gl is a response data value according to the case that the user does much activities.

G2 is a response data value according to the case that the user does normal activities amount is normal.

G3 is a response data value according to the case that the user does a little activity.

H1 is a response data value according to the case that the sex of user is male.

H2 is a response data value according to the case that the sex of user is female.

Il is a response data value according to the case that the user is a smoker.

Id is a response data value according to the case that the user is not a smoker.

The above personal characteristic value is set by a research for measuring temperature, humidity and air current that respondents feel optimum pleasantness varying temperature, air current and humidity after questioning a predetermined number of respondents about the question data. As the result of the measure, the average response value that the largest number of people responded about respective questions is obtained by comparing the response data values of respondents who feel optimum pleasantness under the condition of similar temperature, air current and humidity and setting the response data value to the respective question data according to the temperature, air current and humidity of the respective levels.

The characteristic data calculator 132 of the microcomputer 130 calculates the personal characteristic value using the response data and inputs the calculated personal characteristic vale into the indoor temperature calculator 133-1, the indoor air current calculator 133-2 and the indoor humidity calculator 133-3 of the control calculation unit 133.

The indoor temperature calculator 133-1 outputs an indoor temperature control signal by calculating the cooling or heating indoor temperature that the user can feel the optimum pleasantness in air cooling or heating, by the above inputted personal characteristic value. (S13)

The formula for calculating the indoor temperature is as follows.

cooling indoor temperature =

$$W1 + \text{personal temperature characteristic value} \times X1 \tag{2}$$

heating indoor temperature =

$$Y1 + \text{personal temperature characteristic value} \times Z1 \tag{3}$$

W1 is a cooling base temperature.
X1 is a cooling temperature constant.
Y1 is a heating base temperature.
Z1 is a heating temperature constant.

The indoor air current calculator 133-2 outputs a control signal by calculating the cooling or heating indoor air current in air cooling or heating, by the personal characteristic value inputted from the characteristic data calculator 132. (S14)
The formula for calculating the indoor air current is as follows.

cooling indoor air current =

$$W2 + \text{personal air current characteristic value} \times X2 \tag{4}$$

heating indoor air current =

$$Y2 + \text{personal air current characteristic value} \times Z2 \tag{5}$$

W2 is a cooling base air current.
X2 is a cooling air current constant.
Y2 is a heating base air current.
Z2 is a heating air current constant.

The indoor humidity calculator 133-3 outputs an indoor humidity control signal by calculating the cooling or heating indoor humidity in air cooling or heating, by the personal characteristic value inputted from the characteristic data calculator 132. (S15)
The formula for calculating the indoor humidity is as follows.

cooling indoor humidity =

$$W3 + \text{personal humidity characteristic value} \times X3 \tag{6}$$

heating indoor humidity =

$$Y3 + \text{personal humidity characteristic value} \times Z3 \tag{7}$$

W3 is a cooling base humidity.
X3 is a cooling humidity constant.
Y3 is a heating base humidity.
Z3 is a heating humidity constant.

The control signals of cooling or heating indoor temperature, air current and humidity outputted from the indoor temperature calculator 133-1, the indoor air current calculator 133-2 and the indoor humidity calculator 133-3 are outputted to the control unit 134.

The control unit 134 outputs control signals for controlling driving of the compressor driving unit 170, indoor fan driving unit 140, up-and-down vane driving unit 150 and left-and-right vane driving unit 160, by the above inputted control signal. (S16)

By the above personal characteristic value, the compressor 170, indoor fan 180, up-and-down vane 190 and left-and-right vane 200 are controlled and accordingly temperature, air current and humidity are adjusted according to the respective users, thus to feel the optimum pleasantness of the user.

Also, the respective response data corresponding to the question data are stored in the characteristic data storage unit 131 and the stored data value can be used by reading it in case of selecting the personal characteristic mode.

Namely, when the name, number, nickname and the like of the user are displayed on the display unit 120 of the mode selection key 111 in the remote controller, the user selects a name corresponding to the user using the selection keys 113, 114 and 115 and mode selection key 111 of the remote controller.

When the corresponding name is selected, the microcomputer 130 reads the response data value corresponding to the name, calculates the personal characteristic value and obtains the indoor temperature, air current and humidity in case of air cooling or heating by the personal characteristic value, thus to control the air conditioner.

In addition, in case the user wants to correct the inputted data, the data can be simply changed by selecting the corresponding question and then re-inputting the response data of the corresponding question to change the corresponding response data value. Accordingly, the air conditioner can be easily controlled by the living conditions, thus to improve pleasantness of the user.

Also, the input unit 110 can use a computer and mobile communication terminal as well as a remote controller.

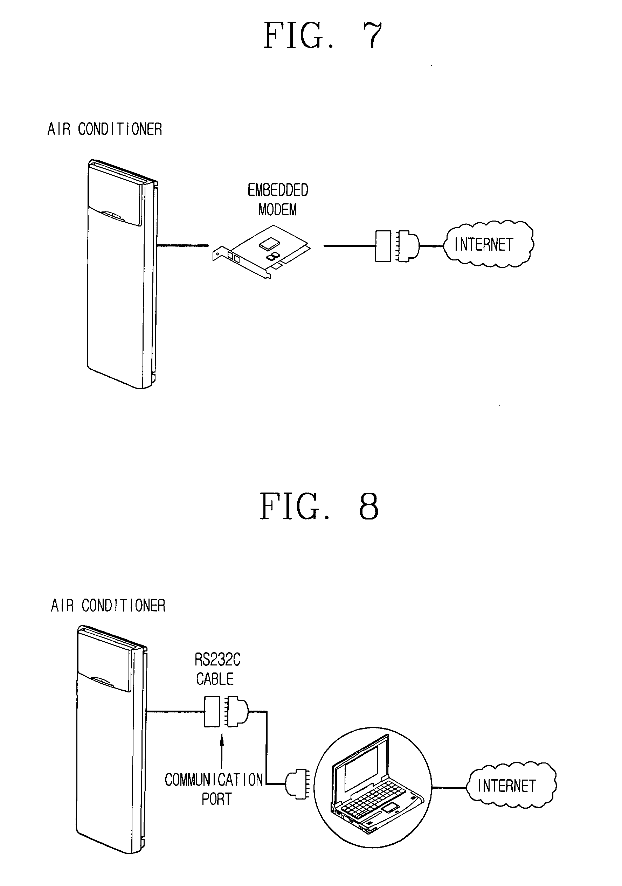

The input unit 110 will be described in detail with reference to Figures 7, 8 and 9.

Figure 7 illustrates schematically the connection between the air conditioner and the internet.

A modem is mounted is built-in the air conditioner to directly connect the air conditioner to the internet.

Since the air conditioner is directly connected to the internet, data on the personal air conditioning information included in the related sites are downloaded using the remote controller which is a remote distance control means.

Figure 8 illustrates schematically the connection between the air conditioner and a computer in accordance with a second embodiment of the input unit of Figure 3.

The air conditioner is connected to a personal computer (PC) via a cable and receives personal air conditioning data from the PC.

That is, the user connects to an internet site though a PC and responds to the question data of the personal air conditioning information, such as cold, heat, humidity, air current, clothes amount in case of air cooling, clothes amount in case of air heating, activity, sex, smoking/nonsmoking and the like. Then, the user downloads the responded personal air conditioning information to the PC through the internet.

The PC transmits the downloaded personal air conditioning information to the air conditioner via the cable (RS232C).

At this time, personal air conditioning information of two or more users can be transmitted at a time.

The microcomputer 130 stores the response data value corresponding to the transmitted personal air conditioning information data, calculates the personal characteristic value by the stored response data value and controls the air conditioner by adjusting indoor temperature, air current and humidity to the preferred level for the respective users in air cooling and heating.

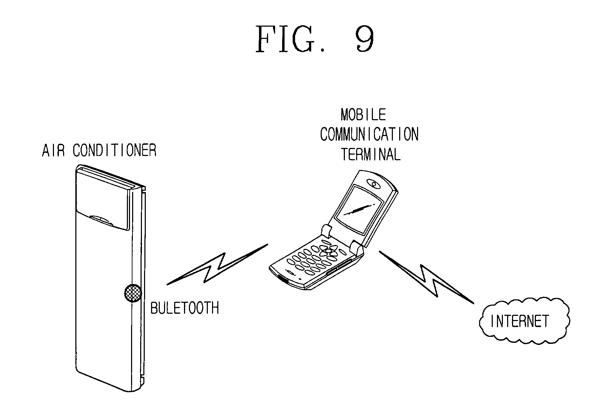

Figure 9 illustrates schematically the connection between the air conditioner and a mobile communication terminal in accordance with a third embodiment of the input unit of Figure 3.

As still another embodiment of the input unit 110 of the air conditioner, a mobile communication terminal can be used.

At this time, a bluetooth module is built-in the air conditioner for carrying out local area communication by the mobile communication terminal.

That is, the mobile communication terminal in which the bluetooth is installed carry out local area communication and downloads personal air conditioning information and data through the internet, thus to perform air cooling or heating and dehumidifying functions of the air conditioner.

As described above, with the apparatus and method for controlling operation of the air conditioner in accordance with the present invention, temperature, air current and humidity according to the respective users can be calculated by the response data inputted by the user and driving of the compressor 210, indoor fan 180, up-and-down vane 190 and left-and-right vane 200 can be controlled, thus to improve a sense of pleasantness and satisfaction of the users.

Also, there is no necessity for inputting the personal air conditioning information whenever the air conditioner is operated in the personal characteristic mode by storing the personal air conditioning information inputted to the air conditioner by the user, thus to enhance convenience of the user.

In addition, in case the user wants to correct the stored data, the data can be corrected by inputting the data corresponding to the portion to be corrected and accordingly, the user can simply and easily control temperature, air current and humidity preferably.

Also, the data for inputting easily the personal air conditioning information using the PC, remote controller and the mobile communication terminal can be downloaded by mounting a modem in the air conditioner and connecting to the internet, and thereby the personal information can be easily stored in the air conditioner.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

**Claims**

1. An apparatus for controlling operation of an air conditioner, comprising:

   a display unit for displaying various question data in order to obtain a personal air conditioning information;
   an input unit for inputting personal air conditioning information corresponding to the question data displayed on the display unit; and
   a microcomputer for calculating a personal characteristic value from the personal air conditioning information inputted from the input unit, and controlling an air conditioner by calculating indoor temperature/air current/ humidity according to the calculated characteristic value in air cooling or heating.

2. The apparatus of claim 1 further comprising a modem for transmitting and receiving data and information about various personal air conditioning by connecting to the internet.

3. The apparatus of claim 1, wherein the display unit and input unit are disposed on a remote controller for inputting data using a remote button.

4. The apparatus of claim 3, wherein the remote controller comprising:

   a display unit for displaying various question data ;
   a mode selection key for selecting either inputting personal air conditioning information or reading the personal air conditioning information data stored earlier in the air conditioner; and
   a selection key for selecting personal air conditioning information corresponding to the respective question data displayed on the display unit.

5. The apparatus of claim 1, wherein the display and input unit are able to use a personal computer (PC) and a mobile communication terminal for inputting various personal air conditioning data and information by connecting to internet sites.

6. The apparatus of claim 1, wherein the air conditioner includes a bluetooth chip therein in order to perform local area communication by using a mobile communication terminal.

7. The apparatus of claim 5, wherein the personal computer is connected to the air conditioner via a cable to transmit various personal air conditioning data and information, which are downloaded through the internet to the air conditioner.

8. The apparatus of claim 1, wherein the question data include coldness, heat, humidity, air current, clothes amount in case of air cooling, clothes amount in case of air heating, activity, sex, smoking/nonsmoking and the like.

9. The apparatus of claim 1, wherein the microcomputer comprising:

   a characteristic data storage unit , in which the various question data and response data values corresponding to the question data inputted from user are stored, for outputting and storing the response data values corresponding to inputted the personal air conditioning information data;
   a characteristic data calculator for calculating the personal characteristic value according to the response data value outputted from the characteristic data storage unit; and

a control calculator for outputting control signals for controlling indoor temperature/air current/humidity by calculating indoor temperature/air current/humidity with the personal characteristic value according to air cooling and heating.

**10.** The apparatus of claim 9, wherein the microcomputer further comprises a control unit for controlling operation of a compressor, an indoor fan, a left-and-right vane, and an up-and-down vane according to the control signal outputted from the control calculator.

**11.** The apparatus of claim 9, wherein the personal characteristic value of the characteristic data calculator is obtained by calculating the data for the question data responded by a user.

**12.** The apparatus of claim 11, wherein the personal characteristic value is set a degree of the temperature, humidity and air current by an average value of the response data, by measuring temperature/air current/humidity that a user feel the optimum pleasant through a research and calculating the average value of the response data according to the question data of a group of people who feel pleasant in the same temperature, humidity and air current.

**13.** The apparatus of claim 9, wherein the control calculator calculates the indoor temperature in air cooling or heating by multiplying the personal characteristic value calculated from the characteristic data calculator by air cooling or heating temperature constant, and then adding the air cooling or heating base temperature to the multiplied value.

**14.** The apparatus of claim 9, wherein the indoor air current of the control calculator is obtained by multiplying the personal characteristic value calculated from the characteristic data calculator by air cooling or heating current constant, and adding the air cooling or heating base current value to the multiplied value.

**15.** The apparatus of claim 9, wherein the indoor humidity of the control calculator is obtained by multiplying the personal characteristic value calculated from the characteristic data calculator by air cooling or heating humidity constant, and adding the air cooling or heating base humidity value to the multiplied value.

**16.** A method for controlling operation of an air conditioner, comprising the steps of:

displaying various question data for detecting personal air conditioning information when a personal characteristic initializing mode is inputted;
inputting personal air conditioning information corresponding to the various question data;
storing the inputted personal air conditioning information;
calculating personal characteristic value by the response data corresponding to the inputted personal air conditioning information;
calculating indoor temperature/air current/humidity according to air cooling or heating by the calculated personal characteristic value; and
controlling the air conditioner by the calculated indoor temperature, air current and humidity according to air cooling or heating.

**17.** The method of claim 16, wherein the question data include coldness, heat, humidity, air current, clothes amount in case of air cooling, clothes amount in case of air heating, activity, sex, smoking/nonsmoking and the like.

**18.** The method of claim 16, wherein the personal characteristic value is obtained by measuring temperature, humidity and air current according to the respectively condition that people feel pleasant in a research and calculating an average value of the measured response data values.

**19.** The method of claim 16, wherein the indoor temperature according to air cooling and heating is obtained by multiplying the personal characteristic value by air cooling or heating temperature constant and adding the air cooling or heating base temperature to the multiplied value.

**20.** The method of claim 16, wherein the indoor air current according to air cooling and heating is obtained by multiplying the personal characteristic value by air cooling or heating current constant and adding the air cooling or heating base current to the multiplied value.

**21.** The method of claim 16, wherein the indoor humidity according to air cooling and heating is obtained by multiplying the personal characteristic value by air cooling or heating humidity constant and adding the air cooling or heating base humidity to the multiplied value.

22. The method of claim 16, wherein the step of inputting is made by selecting to the response data corresponding to the question data using a remote controller which is a remote distance control means .

23. The method of claim 16, wherein the step of inputting comprises responding to the question data on the personal air conditioning information by connecting to the internet using a personal computer connected to the internet, downloading the responded personal air conditioning information to the personal computer through the internet, and inputting the downloaded data into the air conditioner via a cable.

24. The method of claim 23, wherein personal air conditioning information of a plurality of users can be inputted at a time by using the personal computer.

25. A method for controlling operation of an air conditioner performs an operation of air cooling or heating by user's selection, comprising the steps of:

> displaying personal characteristic data which are stored earlier, when a personal characteristic mode is selected;
> selecting data corresponding to the user's air conditioning information among the displayed data;
> calculating personal characteristic value by a response data value according to the selected data; and
> controlling the air conditioner by calculating indoor temperature, air current and humidity according to the air cooling or heating by the personal characteristic value.

26. The method of claim 25, wherein the personal characteristic data are displayed with numbers, names and nicknames.

27. The method of claim 25, wherein the question data to be corrected is selected and the response data to the above question data is re-inputted in case that a correction is required, in the step of selecting the data.

# FIG. 1

# FIG. 2

BLOWN AIR CURRENT

91 92 93 94 60 70

# FIG. 3

- 120 — DISPLAY UNIT
- 110 — INPUT UNIT
- 100 — INDOOR TEMPERATURE SENSOR UNIT
- 130 — MICRO-COMPUTER
- 170 — COMPRESSOR DRIVING UNIT
- 160 — LEFT-AND-RIGHT VANE DRIVING UNIT
- 150 — UP-AND-DOWN VANE DRIVING UNIT
- 140 — INDOOR FAN DRIVING UNIT
- 210 — COMPRESSOR
- 200 — LEFT-AND-RIGHT VANE
- 190 — UP-AND-DOWN VANE
- 180 — INDOOR FAN

# FIG. 4

110

130

133

134

COLDNESS

HEAT

HUMIDITY

AIR CURRENT

CLOTHES AMOUNT IN AIR COOLING

CLOTHES AMOUNT IN AIR HEATING

AGE

SEX

ACTIVITY

SMOKING/ NONSMOKING

131

CHARACTERISTIC DATA STORAGE UNIT

132

CHARACTERISTIC DATA CALCULATOR

PERSONAL CHARACTERISTIC VALUE

$=(AI+An+Ad)$
$+(BI+Bn+Bd)$
$+(CI+Cn+Cd)$
$+(DI+Dn+Dd)$
$+(EI+En+Ed)$
$+(FI+Fn+Fd)$
$+(GI+Gn+Gd)$
$+(HI+Hd)$
$+(II+Id)$

INDOOR TEMPERATURE CALCULATOR

COOLING INDOOR TEMPERATURE
$=W_1$ +PERSONAL TEMPERATURE CHARACTERISTIC VALUE $\times X_1$

HEATING INDOOR TEMPERATURE
$=Y_1$ +PERSONAL TEMPERATURE CHARACTERISTIC VALUE $\times Z_1$

133-1

INDOOR TEMPERATURE CONTROL SIGNAL

INDOOR AIR CURRENT CALCULATOR

COOLING INDOOR AIR CURRENT
$=W_2$ +PERSONAL AIR CURRENT CHARACTERISTIC VALUE $\times X_2$

HEATING INDOOR AIR CURRENT
$=Y_2$ +PERSONAL AIR CURRENT CHARACTERISTIC VALUE $\times Z_2$

133-2

INDOOR AIR CURRENT CONTROL SIGNAL

INDOOR HUMIDITY CALCULATOR

COOLING INDOOR HUMIDITY
$=W_3$ +PERSONAL AIR CURRENT CHARACTERISTIC VALUE $\times X_3$

HEATING INDOOR HUMIDITY
$=Y_3$ +PERSONAL AIR CURRENT CHARACTERISTIC VALUE $\times Z_3$

133-3

INDOOR HUMIDITY CONTROL SIGNAL

CONTROL UNIT

INDOOR FAN DRIVING UNIT/ COMPRESSOR DRIVING UNIT/ UP-AND-DOWN VANE DRIVING UNIT/ LEFT-AND-RIGHT VANE DRIVING UNIT

15

EP 1 279 902 A2

# FIG. 5

START

QUESTION DATA DISPLAY — S10

RESPONSE DATA INPUT
CORRESPONDING TO
QUESTION DATA — S11

PERSONAL CHARACTERISTIC
$$VALUE = (Al+An+Ad)+(Bl+Bn+Bd)$$
$$+(Cl+Cn+Cd)+(Dl+Dn+Dd)$$
$$+(El+En+Ed)+(Fl+Fn+Fd)$$
$$+(Gl+Gn+Gd)+(Hl+Hd)$$
$$+(Il+Id)$$
— S12

— S13

COOLING INDOOR TEMPERATURE
$=W_1$ +PERSONAL TEMPERATURE
CHARACTERISTIC VALUE x $X_1$

HEATING INDOOR TEMPERATURE
$=Y_1$ +PERSONAL TEMPERATURE
CHARACTERISTIC VALUE x $Z_1$

— S14

COOLING INDOOR AIR CURRENT
$=W_2$ +PERSONAL AIR CURRENT
CHARACTERISTIC VALUE x $X_2$

HEATING INDOOR AIR CURRENT
$=Y_2$ +PERSONAL AIR CURRENT
CHARACTERISTIC VALUE x $Z_2$

— S15

COOLING INDOOR HUMIDITY
$=W_3$ +PERSONAL HUMIDITY
CHARACTERISTIC VALUE x $X_3$

HEATING INDOOR HUMIDITY
$=Y_3$ +PERSONAL HUMIDITY
CHARACTERISTIC VALUE x $Z_3$

AIR CONDITIONER
OPERATION — S16

AIR
CONDITIONER
TURN-OFF — S17  NO

YES

END

# FIG. 6

REMOTE
CONTROLLER

DISPLAY UNIT ——120

111 ON/OFF 112

113

STRONG
HEAVY CLOTHES
MUCH ACTIVITY
SMOKING

115

WEAK
SLIM CLOTHES
A LITTLE ACTIVITY
NONSMOKING

114

NORMAL
NORMAL CLOTHES
NORMAL ACTIVITY

# FIG. 7

AIR CONDITIONER

EMBEDDED MODEM

INTERNET

# FIG. 8

AIR CONDITIONER

RS232C CABLE

COMMUNICATION PORT

INTERNET

# FIG. 9